# EUROPÄISCHE PATENTSCHRIFT

(11) **EP 3 739 302 B1**
(45) Veröffentlichungstag und Bekanntmachung des Hinweises auf die Patenterteilung: **21.06.2023**
(21) Anmeldenummer: 20173524.8
(22) Anmeldetag: 07.05.2020
(51) Int. Cl.: G01F 11/28, B30B 15/30, B30B 11/10, B28B 13/02, B28B 1/00

(54) **DOSATOR MIT FÜLLBUCHSEN FÜR PLATTENPRODUKTIONSANLAGEN**
DOSER WITH FILLING SLEEVES FOR PLATE PRODUCTION INSTALLATIONS
DOSEUR POURVU DE MANCHON DE REMPLISSAGE POUR INSTALLATIONS DE FABRICATION DE PANNEAUX

(30) Priorität: 17.05.2019 DE 102019113025
(43) Veröffentlichungstag der Anmeldung: 18.11.2020
(73) Patentinhaber: SR-Schindler Maschinen - Anlagetechnik GmbH, 93057 Regensburg Bayern (DE)
(72) Erfinder: STÖCKER, Robert, 93197 Zeitlarn (DE)
(74) Vertreter: Hannke, Christian

(56) Entgegenhaltungen:
- EP-B1- 1 669 179
- DE-A1- 1 542 383
- DE-A1- 19 525 817

## Beschreibung

Die vorliegende Erfindung betrifft eine Dosiervorrichtung zur Anordnung an einer Plattenproduktionsanlage zur Produktion von Stein- und Betonplatten, wobei die Dosiervorrichtung einen Dosatortopf, mindestens eine obere Dosatorbodenscheibe mit mindestens einer Auslassöffnung, und eine Dosiereinheit mit einer Materialeingangsöffnung und einer Materialausgangsöffnung aufweist. Die Dosiereinheit ist bevorzugt an der oberen Dosatorbodenscheibe angeordnet und durch die Auslassöffnung ist Material aus dem Dosatortopf in die Dosiereinheit füllbar. Die Dosiereinheit ist zwischen der oberen Dosatorbodenscheibe und einer unteren Dosatorbodenscheibe angeordnet, die in einer Höhenrichtung unterhalb der oberen Dosatorbodenscheibe angeordnet ist. Eine Größe der Dosiereinheit ist durch eine Veränderung einer Distanz der oberen Dosatorbodenscheibe zur unteren Dosatorbodenscheibe veränderbar. Die vorliegende Erfindung betrifft auch ein Verfahren zum Dosieren von Material zur Produktion von Stein- und Betonplatten mit einer Dosiervorrichtung zur Anordnung an einer Plattenproduktionsanlage. Das Dokument DE 15 42 383 A1 offenbart einen Dosierapparat, wie er im Stand der Technik bekannt ist.

Plattenproduktionsanlagen für insbesondere Terrazzo-Betonwerksteinplatten, Pflastersteine in Hermetikqualität, Terrassen und Gehwegplatten, Einschicht- und Zweischichtplatten mit kombiniertem Filter-/Hermetikpressverfahren sind häufig derart ausgebildet, dass sie in kreisförmiger Darstellung eine Hermetikpresse aufweisen, die unter anderem an einer Position einen Dosator zeigt.

Derartige Dosatoren bzw. Dosatorvorrichtungen weisen im Bodenbereich eines Dosatortopfes, in dem das Material für die Produktion von Platten vorhanden ist, Öffnungen auf, an welchen sich Füllbuchsen, welche sich in der Regel vertikal erstrecken, anschließen. Diese Füllbuchsen können eine bestimmte Volumenmenge an Material aufnehmen, um anschließend das Material mit einer vorbestimmten Volumenmenge an darunterliegende Formen weiter zu geben. Die Volumenmenge des Materials ist durch die Größe der Füllbuchsen vorbestimmt.

Häufig ergibt sich hierbei das Problem, dass beispielsweise bei einer Produktion von Platten mit einer gewünschten anderen Größe auch eine andere Volumenmenge innerhalb der Füllbuchsen vorhanden sein muss. Daraus ergibt sich ein Auswechseln der Füllbuchsen oder des gesamten Dosators, was zeit- und kostenaufwändig ist.

Demzufolge ist es Aufgabe der Erfindung, ein Auswechseln von Füllbuchsen oder des gesamten Dosators bei einem Produktionswechsel auf Plattenprodukte mit einer anderen Volumengröße zu vermeiden und somit Zeit und Kosten im Produktionsablaufgeschehen zu sparen.

Diese Aufgabe wird gemäß einer Dosiervorrichtung zur Anordnung an einer Plattenproduktionsanlage zur Produktion von Stein- und Betonplatten gelöst, wobei sich die Dosiervorrichtung in eine Längenrichtung, eine Breitenrichtung und eine Höhenrichtung erstreckt und einen Dosatortopf zur Aufnahme von zu dosierendem Material, mindestens eine obere Dosatorbodenscheibe mit mindestens einer Auslassöffnung zum Auslassen des Materials in mindestens eine Dosiereinheit mit einer Materialeingangsöffnung und einer Materialausgangsöffnung zum Dosieren einer Auslassmenge des Materials aufweist.

Die Dosiereinheit ist an der oberen Dosatorbodenscheibe angeordnet und durch die Auslassöffnung ist Material aus dem Dosatortopf in die Dosiereinheit füllbar. Die Dosiereinheit ist zwischen der oberen Dosatorbodenscheibe und einer unteren Dosatorbodenscheibe angeordnet, die in Höhenrichtung unterhalb der oberen Dosatorbodenscheibe angeordnet ist. Eine Größe der Dosiereinheit ist durch eine Veränderung einer Distanz der oberen Dosatorbodenscheibe zur unteren Dosatorbodenscheibe veränderbar.

Durch eine in ihrer Größe verstellbare Dosiereinheit kann eine definierte Volumenmenge des Materials bestimmt und verändert werden, ohne die Dosiereinheit oder den gesamten Dosator bzw. der Dosiervorrichtung wechseln zu müssen. Auf diese Weise können auf einfache Art und Weise verschiedenste zu dosierende Volumenmengen (auch während des Betriebs) geändert und realisiert werden. Beispielsweise können unterschiedlich große Steinplattenformen bzw. Aufnahmeeinrichtungen zur Aufnahme einer von der Dosiereinrichtung dosierten Materialmenge im selben Füllvorgang befüllt werden. Idealerweise weist die Dosiervorrichtung auch ein Rührwerk, bspw. ein Planetenrührwerk zum Rühren des Materials auf. Vorzugsweise weist der Dosatortopf einen hydraulisch betätigten und/oder pneumatisch unterstützten Auswurf auf.

In einer vorteilhaften Ausführungsform ist die untere Dosatorbodenscheibe in Höhenrichtung gegenüber der oberen Dosatorbodenscheibe höhenverstellbar, wobei die obere Dosatorbodenscheibe an dem Dosatortopf fixiert ist. Unter einer Höhenverstellbarkeit wird insbesondere eine Verstellung in einer vertikalen Richtung verstanden.

Bevorzugt ist innerhalb eines Dosators bzw. der Dosiervorrichtung für eine Plattenproduktionsanlage in seinem Bodenbereich eine mit dem Dosatortopf fest verbundene obere Dosatorbodenscheibe und eine dazu in Höhenrichtung verstellbare weitere und/oder untere Dosatorbodenscheibe anzuordnen. Alternativ kann jedoch auch anstelle von einer fixierten Dosatorbodenscheibe und einer einzigen höhenverstellbaren Dosatorbodenscheibe die Anordnung mehrerer fixierter und höhenverstellbarer Dosatorbodenscheiben nebeneinander, ineinander und in jeglicher anderer Konstellation möglich sein. Dadurch ist es möglich mehrere Dosiereinheiten zu verbauen und diese zwischen den Dosatorbodenscheiben anzuordnen. Weiterhin können bei Einsatz von mehr als zwei Dosatorbodenscheiben Dosiereinheiten unterschiedlicher Abmessungen besser zueinander angeordnet werden sodass beispielsweise kleinere Dosiereinheiten zwischen größeren Dosiereinheiten angeordnet werden können bzw. anordenbar sind.

In einer weiteren Ausführungsform weist die Dosiervorrichtung eine Hubeinrichtung auf, durch die die Dosatorbodenscheiben und insbesondere die untere Dosatorbodenscheibe in Höhenrichtung höhenverstellbar ist. Vorzugsweise weist die Hubeinrichtung zwei, drei, vier oder mehrere Hubelemente auf, die nach oben und unten verschoben werden können und bevorzugt als Hubstangen ausgebildet sind. Die Hubelemente können dabei von Führungselementen bspw. Buchsenstangen geführt werden. Dabei ist es denkbar, dass die Hubelemente innerhalb oder außerhalb der Führungselemente angeordnet sind bzw. führbar sind. Die Hubelemente und/oder die Führungselemente sind vorzugsweise mithilfe von Fixierungselementen an der oberen und/oder unteren Dosatorbodenscheibe fixiert.

Mithilfe von Motoren, bspw. Stellmotoren bzw. Servomotoren, pneumatischen und/oder hydraulischen Vorrichtungen können die Hubelemente verschoben bzw. nach oben und nach unten in Höhenrichtung bewegt werden, bspw. gegenüber den Führungselementen. Möglich ist auch eine mechanische Bewegung die bspw. mittels Zahnrädern, Schubgliederbändern, Riemen, Traversen, Gewindespindeln und/oder Schienen an die Hubelemente übertragbar ist.

Es ist weiterhin vorteilhaft, wenn die Dosiervorrichtung mindestens eine zweite Dosiereinheit, oder mehrere Dosiereinheiten aufweist und eine zweite oder mehrere Auslassöffnungen, wobei bevorzugt jede Dosiereinheit einer Auslassöffnung zuordenbar ist. Bevorzugt entspricht daher die Anzahl der Dosiereinheiten der Anzahl der Auslassöffnungen. Dabei können diese Dosiereinheiten in einer Reihe angeordnet sein, beispielsweise nebeneinander entlang einer geraden Linie.

Vorzugsweise sind die Dosiereinheiten als Füllbuchsen ausgebildet, die das Material vorzugsweise optimal aufnehmen können. Idealerweise weisen die Dosiereinheiten jeweils eine Materialeingangsöffnung und eine Materialausgangsöffnung auf. Bevorzugt sind die Öffnungsquerschnitte dieser Materialeingangsöffnung und der Materialausgangsöffnung parallel zueinander. Dabei ist es möglich und bevorzugt dass diese Dosiereinheiten bzw. Füllbuchsen sich entlang einer vorgegebenen Längsrichtung erstrecken und die Materialeingangsöffnung sowie die Materialausgangsöffnung senkrecht zu dieser Längsrichtung stehen.

Dabei ist insbesondere jede Materialeingangsöffnung einer Auslassöffnung der oberen Dosatorbodenscheibe zuordenbar, sodass bevorzugt eine Volumenmenge des Materials durch die Auslassöffnungen und die Materialeingangsöffnungen in mindestens eine, vorzugsweise jedoch jede Dosiereinheit füllbar ist. Dabei ist es möglich, dass eine Größe bzw. Abmessungen einer Materialeingangsöffnung vorzugsweise deckungsgleich mit, maximal jedoch bis zu 10% kleiner oder größer derjenigen Größe der ihr zugeordneten Auslassöffnung ist/sind. Vorzugsweise sind die Materialeingangsöffnungen deckungsgleich, oder zumindest bis maximal 10% versetzt gegenüber den Auslassöffnungen anordenbar. Auf diese Weise wird ein ungehinderter Materialfluss durch beide Öffnungen sichergestellt.

In einer weiteren Ausführungsform ist jede Dosiereinheit in der Höhenrichtung verlängerbar oder verkürzbar. Bevorzugt ist ein Abstand zwischen der Materialeingangsöffnung und der Materialausgangsöffnung veränderbar.

Durch eine Veränderung der Dosatorbodenscheibe zu der fest angeordneten Dosatorbodenscheibe in Höhenrichtung ist es möglich, darin angeordnete Dosatorbuchsen bzw. Füllbuchsen in ihrer Höhenrichtung unterschiedlich lang auszubilden, wodurch sich unterschiedliche Volumina innerhalb der sich in Höhenrichtung erstreckenden, zumeist rohrförmig ausgebildeten Dosatorbuchsen/Füllbuchsen/Dosiereinheiten ergeben. Dies hat zur Folge, dass unterschiedliche Materialvolumina derjenigen Materialien, die zuvor in den Füllbuchsen/ Dosatorbuchsen/Dosiereinheiten abgefüllt worden sind, erzielt werden können, je nachdem wie weit die untere höhenverstellbare Dosatorbodenscheibe gegenüber der fixierten und stationär angeordneten Dosatorbodenscheibe nach unten oder nach oben zuvor bewegt worden ist, um hierdurch unterschiedlich lange Füllbuchsen/Dosatorbuchsen/Dosiereinheiten zu erhalten.

Die unterschiedlich langen Dosatorbuchsen bzw. Füllbuchsen werden dadurch geschaffen, dass diese rohrförmigen Gebilde beispielsweise in Form von mehreren ineinandergleitenden Rohrabschnitten nach dem Teleskopprinzip ausgebildet sind oder aber auch in Form eines Faltenbalges ihre Länge in Höhenrichtung verändern können. Auf diese Weise werden unterschiedliche Volumina in diesen Buchsen abgefüllt, je nachdem wie weit die untere Dosatorbodenscheibe von der oberen fixierten Dosatorbodenscheibe beabstandet ist.

Demnach ist es denkbar, dass die Dosiereinheiten eine Teleskopeinheit mit mehreren ineinander gleitenden Abschnitten und/oder ein Balgelement aufweisen. Dabei umfasst jede Dosiereinheit mindestens ein oberes Teleskopelement, bspw. in Form eines Rohrelements und ein unteres Teleskopelement, bspw. in Form eines Anschlags. Idealerweise ist das untere Teleskopelement als Rohrelement ausgebildet und/oder umschließt das obere Teleskopelement, welches ebenfalls als Rohrelement ausgebildet sein kann. Bevorzugt weist daher das obere Teleskopelement einen geringeren Querschnitt auf als das untere Teleskopelement.

Allerdings ist es auch möglich, dass das obere Teleskopelement das untere Teleskopelement umschließt. Das umschließende Teleskopelement kann dabei auch eine gegenüber dem umschlossenen Teleskopelement dickere bzw. stärkere Wandung aufweisen, um bspw. als Anschlag bzw. Mindestabstandshalter der Dosatorbodenscheiben fungieren zu können.

Vorzugsweise ist das untere Teleskopelement an der unteren Dosatorbodenscheibe und/oder das obere Teleskopelement an der unteren Dosatorbodenscheibe angeordnet. Denkbar ist auch, dass eine oder mehrere, insbesondere jede Teleskopeinheit bzw. Dosiereinheit mindestens ein, vorzugsweise mehr weitere Zwischenteleskopelemente aufweisen, welche/s zwischen dem oberen und unteren Teleskopelement angeordnet ist/sind. So können die Größen der Dosiereinheiten weiter vergrößert werden.

Natürlich können ebenso auch unterschiedliche Gruppen von Dosierelemente verwendet werden, bspw. eine Gruppe von Dosiereinheiten Teleskopeinheiten und eine Gruppe von Dosiereinheiten mit Balgelementen. Auf diese Weise können verschiedene Varianten zum Einsatz kommen, die für jeweils eine bestimmte Größe besser geeignet ist sodass bspw. eine bestimmte Gruppe von größeren Dosierelementen Teleskopeinheiten aufweist und eine andere Gruppe von kleineren Dosiereinheiten Balgelemente aufweist, oder umgekehrt.

Durch die Anordnung mehrerer fixierter Dosatorbodenscheiben und höhenverstellbarer Dosatorbodenscheiben können verschiedene Füllbuchsen/Dosatorbuchsen/Dosiereinheiten unterschiedlich höhenverstellt werden. Dies wird dadurch erreicht, dass eine erste fixierte Dosatorbodenscheibe mit einer zugeordneten höhenverstellbaren Dosatorbodenscheibe anders agiert als eine zweite fixierte Dosatorbodenscheibe mit einer dazugehörigen höhenverstellbaren Dosatorbodenscheibe. Hierdurch können verschiedene Füllbuchsen/Dosatorbuchsen/ Dosiereinheiten unterschiedlich große Volumina aufnehmen, wobei sämtliche Dosatorbuchsen/Füllbuchsen/Dosiereinheiten, die zu einem bestimmten Paar von fixierter Dosatorbodenscheibe und zugehöriger höhenverstellbarer Dosatorbodenscheibe gehören, jeweils einheitlich das gleiche Materialvolumen aufnehmen. Dies ermöglicht, dass einzelnen Gruppen von Materialvolumen mit dazugehörigen Füllbuchsen/Dosatorbuchsen/Dosiereinheiten geschaffen werden können. Auch ist es denkbar, dass anstelle einer ganzen Gruppe lediglich eine Füllbuchse/eine Dosatorbuchse durch eine entsprechend zugeordnete fixierte Dosatorbodenscheibe und einer dazugehörigen höhenverstellbaren Dosatorbodenscheibe aktiviert und verstellt wird.

Es ist auch denkbar, dass die untere Dosatorbodenscheibe parallel zur oberen Dosatorbodenscheibe angeordnet ist. Dabei ist vorzugsweise ein Paar aus einer fixierten Dosatorbodenscheibe und einer höhenverstellbaren Dosatorbodenscheibe immer parallel zueinander angeordnet. Auf diese Weise sind die Größen der Dosiereinheiten optimal einstellbar. Wenn die Dosatorbodenscheiben in einem Winkel zueinander angeordnet wären, bestünde die Gefahr, dass sich die Teleskopelemente der Dosiereinheiten verkanten. Es ist aber auch möglich, dass eine Dosatorbodenscheibe in einem Winkel höher als 0°, vorzugsweise höher als 5°, vorzugsweise höher als 10° und/oder geringer als 70°, vorzugsweise geringer als 60°, vorzugsweise geringer als 50° zu einer anderen Dosatorbodenscheibe angeordnet ist.

In einem derartigen Fall, könnten die Teleskopelemente bzw. die Dosiereinheiten derart ausgebildet sein, dass ein Verkanten nicht möglich ist, bzw. die Teleskopelemente ein flexibles Material aufweisen. Wichtig ist jedoch, dass eine Hubbewegung der unteren Dosatorbodenscheibe gleichmäßig entlang der Höhenrichtung linear und/oder parallel zur oberen Dosatorbodenscheibe durchführbar ist, um ein Verkanten der Hubelemente zu vermeiden und/oder eine Beschädigung der Hubeinrichtung.

Es ist auch vorteilhaft, wenn die untere Dosatorbodenscheibe Ablassöffnungen aufweist, wobei jede Dosiereinheit einer Ablassöffnung zuordenbar ist. Dabei ist es möglich, dass eine Größe bzw. Abmessungen einer Materialausgangsöffnung vorzugsweise deckungsgleich mit, maximal jedoch bis zu 10% kleiner oder größer derjenigen Größe der ihr zugeordneten Ablassöffnung ist/sind. Vorzugsweise sind die Materialausgangsöffnungen deckungsgleich, oder zumindest bis maximal 10% versetzt gegenüber den Ablassöffnungen anordenbar. Auf diese Weise wird ein ungehinderter Materialfluss durch beide Öffnungen sichergestellt, sodass die dosierte Volumenmenge optimal aus einer Dosiereinheit in die Aufnahmeeinrichtung füllbar ist.

Vorzugsweise ist an den Ablassöffnungen jeweils ein Ablaufelement angeordnet, welches idealerweise neigbar und/oder rotierbar ist, sodass die dosierte Volumenmenge des Materials in eine definierte Richtung in die Aufnahmeeinrichtung ablaufen kann bzw. leitbar ist. Dabei kann das Ablaufelement schalen-, rohr- oder rinnenartig bzw. konkav und/oder an einer Vorderseite spitz zulaufend ausgebildet sein. Auf diese Weise ist sichergestellt, dass das Material nicht neben die Aufnahmeeinrichtung ablaufen kann.

In einer bevorzugten Ausführungsform ist/sind die Auslassöffnung/en und/oder die Ablassöffnung/en verschließbar. Bevorzugt ist/sind die Auslassöffnung/en und/oder die Ablassöffnung/en mittels einer Dosatorverschlussplatte verschließbar, welche insbesondere eine Größe größer als diejenige der Auslassöffnung/en und/oder die Ablassöffnung/en aufweist, sodass die Auslassöffnung/en und/oder die Ablassöffnung/en vollständig und/oder partiell verschließbar sind. Idealerweise ist mindestens eine Dosatorverschlussplatte in Höhenrichtung oberhalb und/oder unterhalb der Auslass- und/oder Ablassöffnung anordenbar, sodass eine oder beide Öffnungen verschließbar sind.

Vorteilhaft ist es, wenn die Auslassöffnung/en gegenüber den/der Ablassöffnung/en versetzt angeordnet ist/sind. Vorzugsweise sind die Auslassöffnung/en gegenüber den/der Ablassöffnung/en in Längen- und/oder Breitenrichtung versetzt zueinander angeordnet. Idealerweise ist ein Versatz einer Dosiereinheit zugeordneten Auslassöffnung gegenüber einer derselben Dosiereinheit zugeordneten Ablassöffnung größer als eine Größe, ein Durchmesser und/oder einer Längen und/oder Breitenabmessung der zugeordneten Dosiereinheit. Auf diese Weise kann Material, welches in die Dosiereinheit eingefüllt wird, nicht zur selben Zeit auch wieder aus der Dosiereinheit austreten. Jede einem Paar aus einer Auslassöffnung und einer Ablassöffnung zugeordneten Dosiereinheit ist vorzugsweise demnach an mindestens einer Öffnung durch einen der Dosatorbodenscheiben verschlossen. Es ist möglich, dass bspw. Materialausgangsöffnung durch die untere Dosatorbodenscheibe verschlossen ist, oder die Materialeingangsöffnung durch die obere Dosatorbodenscheibe.

In einer weiteren Ausführungsform sind die Dosiereinheit/en gegenüber den Auslassöffnungen und/oder den Ablassöffnungen in der Breitenrichtung und/oder der Längsrichtung verschiebbar (also insbesondere in einer zu der vertikalen Richtung senkrecht stehenden Richtung). Vorzugsweise sind Dosiereinheiten in Längsrichtung und/oder Breitenrichtung verschiebbar, sodass jeweils eine Dosiereinheit in Höhenrichtung unterhalb einer Auslassöffnung und/oder oberhalb einer Ablassöffnung anordenbar ist. Das heißt, dass jede Dosiereinheit bevorzugt von einer Position unterhalb einer Auslassöffnung in Längsrichtung und/oder Breitenrichtung zu einer Position oberhalb der Ablassöffnung und auch wieder zurück verschiebbar ist.

Dadurch kann jede Dosiereinheit in einer Position unterhalb einer Auslassöffnung mit Material befüllt werden und danach in einer Position oberhalb der Ablassöffnung die dosierte Volumenmenge abgelassen werden. Vorzugsweise sind die Dosiereinheiten durch Dosierführungselemente, bspw. Schienen, Rillen und/oder Räder führbar. Es ist jedoch auch möglich, dass eine Verschiebebewegung der Dosierelemente motorisch, pneumatisch und/oder hydraulisch ausführbar ist.

In einer Ausführungsform sind die Dosiereinheiten parallel zueinander angeordnet und/oder verschiebbar. Vorzugsweise ist jede Dosiereinheit linear verschiebbar, sodass die Dosiereinheiten insbesondere parallel zueinander und/oder abhängig oder unabhängig voneinander verschiebbar sind. Auf diese Weise kann ein optimaler Befüllvorgang einer Aufnahmeeinrichtung mit Formen unterschiedlicher Volumina realisiert werden, indem bspw. erst eine Gruppe größerer Dosiereinheiten größere Formen befüllt und direkt im Anschluss eine Gruppe kleinerer Dosiereinheiten mit geringeren Volumina kleinere Formen derselben Aufnahmeeinrichtung befüllt.

Selbstverständlich können mehrere parallel zueinander angeordnete Dosatorbuchsen/Füllbuchsen/Dosiereinheiten, deren oberer Fülleingang im Bereich der fixierten Dosatorbodenscheibe angeordnet ist, durch eine Bewegung einer Dosatorbodenscheibe gleichzeitig und parallel ablaufend in ihrer Länge verändert werden, wobei der Materialausgang der Buchsen am unteren Ende der Füllbuchsen/Dosatorbuchsen/Dosiereinheiten im Bereich der höhenverstellbaren Dosatorbodenscheibe liegt.

Vorteilhaft ist es, wenn die Dosiereinheit/en eine Verschlussplatte aufweist/aufweisen, durch die die Auslassöffnung/en verschließbar ist/sind. Vorzugsweise ist an jeder Dosiereinheit mindestens eine, vorzugsweise zwei oder mehr Dosatorverschlussplatten angeordnet. Dabei kann bspw. eine Dosatorverschlussplatte an der Materialeingangsöffnung angeordnet sein, sodass die Auslassöffnung durch die Dosatorverschlussplatte verschließbar ist. Allerdings kann eine Dosatorverschlussplatte auch an der Materialausgangsöffnung angeordnet sein, sodass die Ablassöffnung durch die Dosatorverschlussplatte verschließbar ist. Es ist auch möglich, dass eine Verschlussplatte an jeweils einer oder mehrerer Dosiereinheiten angeordnet ist, oder mehrere Dosiereinheiten an einer gemeinsamen Verschlussplatte angeordnet sind. Auf diese Weise ist ein dauerhafter Materialfluss aus dem Dosatortopf verhinderbar.

Die Aufgabe wird auch durch eine Plattenproduktionsanlage mit einer Dosiervorrichtung entsprechend einer oder mehreren der vorgenannten Ausführungsformen gelöst. Dabei weist die Plattenproduktionsanlage eine oder mehrere Aufnahmeeinrichtungen zur Aufnahme einer von der Dosiereinrichtung dosierten Materialmenge auf, wobei die Aufnahmeeinrichtung in einer Höhenrichtung unterhalb der Dosiereinrichtung angeordnet ist. Es ist möglich, dass die Plattenproduktionsanlage mindestens eine Befüllstation mit der Dosiervorrichtung, mindestens eine Verteilerstation zur optimalen Verteilung unterschiedlicher Materialien, mindestens eine Befüllstation zur Befüllung einer Form mit einem Beschickmaterial, mindestens eine Vorpress und eine Hauptpressstation zum Pressen der Platten und/oder mindestens eine Ausstoßstation zum Ausstoßen der Plattenrohlinge aufweist.

Vorzugsweise weist die Aufnahmeeinrichtung/en mehrere Formen auf. Diese Formen können unterschiedliche Volumenmengen aufnehmen und/oder unterschiedliche Abmessungen aufweisen, sodass Platten unterschiedlicher Größen und Abmessungen herstellbar sind. Es ist denkbar, dass die Formen der Aufnahmeeinrichtung/en einen rechteckigen, quadratischen, dreieckigen, sechseckigen oder anderweitig polygonalen Querschnitt, oder aber runden oder ovalen Querschnitt aufweisen.

Idealerweise ist die Aufnahmeeinrichtung kastenförmig ausgebildet und/oder weist Trennwände zwischen den Formen auf. Die Aufnahmeeinrichtungen können bspw. auf einer Transportvorrichtung, insbesondere einer scheibenförmigen Transporteinrichtung von einer Station zu einer anderen Station transportiert werden, sodass jeweils eine Aufnahmeeinrichtung nacheinander zu jeder Station transportierbar ist.

Die Aufgabe wird auch durch ein Verfahren zum Dosieren von Material zur Produktion von Stein- und Betonplatten mit einer Dosiervorrichtung zur Anordnung an einer Plattenproduktionsanlage gelöst. Die Dosiervorrichtung erstreckt sich in eine Längenrichtung, eine Breitenrichtung und eine Höhenrichtung. Die Dosiervorrichtung weist weiterhin einen Dosatortopf zur Aufnahme von zu dosierendem Material, mindestens eine obere Dosatorbodenscheibe mit mindestens einer Auslassöffnung zum Auslassen des Materials aus dem Dosatortopf in mindestens eine Dosiereinheit zum Dosieren einer Auslassmenge des Materials auf.

Die Dosiereinheit ist an der oberen Dosatorbodenscheibe angeordnet und durch die Auslassöffnung wird Material aus dem Dosatortopf in die Dosiereinheit gefüllt. Die Dosiereinheit ist dabei zwischen der oberen Dosatorbodenscheibe und einer unteren Dosatorbodenscheibe angeordnet, die in Höhenrichtung unterhalb der oberen Dosatorbodenscheibe angeordnet ist. Eine Größe der Dosiereinheit wird durch eine Veränderung einer Distanz der oberen Dosatorbodenscheibe zur unteren Dosatorbodenscheibe verändert. Das Verfahren umfasst die Schritte:
a. Einstellung einer gewünschten Distanz der oberen Dosatorbodenscheibe zur unteren Dosatorbodenscheibe, um eine gewünschte Größe der Dosiereinheit festzulegen.
b. Öffnen der Auslassöffnung und Befüllen der Dosiereinheit durch eine Materialeingangsöffnung der Dosiereinheit,
c. Schließen der Auslassöffnung und Entleeren der Dosiereinheit durch eine Materialausgangsöffnung der Dosiereinheit.

Durch eine in ihrer Größe verstellbaren Dosiereinheit kann eine definierte Volumenmenge des Materials bestimmt und verändert werden, ohne die Dosiereinheit oder den gesamten Dosator bzw. die Dosiervorrichtung wechseln zu müssen. Auf diese Weise können auf einfache Art und Weise verschiedenste zu dosierende Volumenmengen während des Betriebs geändert und realisiert werden. Beispielsweise können unterschiedlich große Steinplattenformen bzw. Aufnahmeeinrichtungen zur Aufnahme einer von der Dosiereinrichtung dosierten Materialmenge im selben Füllvorgang befüllt werden. Vorzugsweise ist die Dosiervorrichtung entsprechend einer oder mehreren der vorgenannten Ausführungsformen ausgebildet, sodass auch die vorgenannten Vorteile genutzt werden können.

In einem ersten Verfahrensschritt wird die zu dosierende Volumenmenge des Materials durch eine Veränderung der Distanz der oberen und unteren Dosatorbodenscheibe, und eine damit einhergehende Größenänderung der Dosiereinheit eingestellt. Idealerweise wird hierbei die untere Dosatorbodenscheibe relativ zu der vorzugsweise fixierten oberen Dosatorbodenscheibe insbesondere durch eine Hubbewegung gleichmäßig entlang der Höhenrichtung linear und/oder parallel zur oberen Dosatorbodenscheibe bewegt. Dadurch verlängert oder verkürzt sich eine Länge der Dosiereinheit, was vorzugsweise zu einer Größenänderung eines Fassungsvermögens der Dosiereinheit führt. Durch diese Größenänderung kann die zu dosierende Materialmenge optimal festgelegt werden.

Ein nächster, insbesondere zweiter Verfahrensschritt besteht darin, die Auslassöffnung der oberen Dosatorbodenscheibe zu öffnen. Dies geschieht vorzugsweise in dem die Dosiereinheit relativ zur Längs- und/oder Breitenrichtung verschiebbar angeordnet ist, und insbesondere die Dosiereinheit derart verschoben wird, dass die Materialeingangsöffnung in Höhenrichtung unterhalb der Auslassöffnung positioniert wird, sodass Material durch beide Öffnungen aus dem Dosatortopf in die Dosiereinheit gelangen kann.

Die Auslassöffnung wird idealerweise dadurch geöffnet, dass eine Verschlussplatte, die vorzugsweise an der Dosiereinheit und in Höhenrichtung unterhalb der Auslassöffnung angeordnet ist die Auslassöffnung bei einer Verschiebebewegung der Dosiereinheit so lange verdeckt, bis die Materialeingangsöffnung unterhalb der Auslassöffnung positioniert ist. Jedoch ist es auch denkbar, dass die Verschlussplatte unabhängig von der Dosiereinheit bewegbar ist und/oder als separate Einheit an der oberen Dosatorbodenscheibe angeordnet ist. Weiterhin ist es möglich, dass der Verfahrensschritt des Öffnens der Auslassöffnung vor dem Verfahrensschritt des Einstellens der Größe der Dosiereinheit stattfindet.

In einem weiteren, insbesondere dritten Verfahrensschritt wird die Auslassöffnung verschlossen und die Dosiereinheit geleert. Dies geschieht vorzugsweise in dem die Dosiereinheit derart verschoben wird, dass die Materialausgangsöffnung in Höhenrichtung oberhalb einer Ablassöffnung positioniert wird, die an der unteren Dosatorbodenscheibe angeordnet ist, sodass eine dosierte Volumenmenge durch beide Öffnungen aus der Dosiereinheit und in eine Aufnahmeeinrichtung bzw. eine für das Material vorgesehene Form gelangen kann. Dabei wird insbesondere die Verschlussplatte derart bewegt, dass sie die Auslassöffnung verdeckt und somit verschließt. Auf diese Weise kann Material nur dann aus dem Dosatortopf austreten, wenn die Dosiereinheit unterhalb der Auslassöffnung positioniert ist.

Vorteilhaft ist es, wenn die Dosiervorrichtung mindestens eine zweite Dosiereinheit oder mehrere Dosiereinheiten aufweist und eine zweite oder mehrere Auslassöffnungen, wobei alle Dosiereinheiten oder eine gewünschte Anzahl an Dosiereinheiten gleichzeitig befüllt werden. Auf diese Weise kann die Produktion von Platten deutlich beschleunigt werden und es können mehr Platten innerhalb einer Zeiteinheit hergestellt werden. Vorzugsweise ist jede Dosiereinheit einer Auslassöffnung und einer Ablassöffnung zugeordnet, sodass jeweils eine Dosiereinheit in Höhenrichtung unterhalb einer Auslassöffnung und oberhalb einer Ablassöffnung positioniert werden kann. Idealerweise ist an jeder Dosiereinheit eine Verschlussplatte angeordnet, mit der die jeweils der Dosiereinheit zugeordnete Auslassöffnung verdeckt werden kann. Bevorzugt werden die Dosiereinheiten linear und/oder parallel zueinander verschoben, sodass insbesondere mehrere Platten zeitgleich geformt bzw. das Material für mehrere Platten zeitgleich dosiert wird.

Es ist auch vorteilhaft, wenn die Auslassöffnung/en durch ein Verschieben der Dosiereinheit/en gegenüber den Auslassöffnung/en verschlossen wird/werden. Wenn eine Verschlussplatte an den Dosiereinheiten angeordnet ist und vorzugsweise die Auslassöffnungen durch ein Verschieben der Dosiereinheiten und der Verschlussplatte verschlossen wird. Auf diese Weise wird kein zusätzlicher Motor bzw. Mechanismus benötigt um die Auslassöffnungen zu verschließen, wodurch die Wartung vereinfacht wird und Kosten, insbesondere Energiekosten verringert werden.

Weitere, Ziele, Vorteile, Merkmale und Anwendungsmöglichkeiten der vorliegenden Erfindung ergeben sich aus der nachfolgenden Beschreibung von Ausführungsbeispielen anhand der Zeichnungen.

Dabei zeigt:
- Fig. 1: Schematische perspektivische Darstellung der Dosiervorrichtung mit einer Teilquerschnittsansicht.
- Fig. 2: Schematische Querschnittsdarstellung der Dosiervorrichtung
- Fig. 3: Schematische Darstellung einer Plattenproduktionsanlage

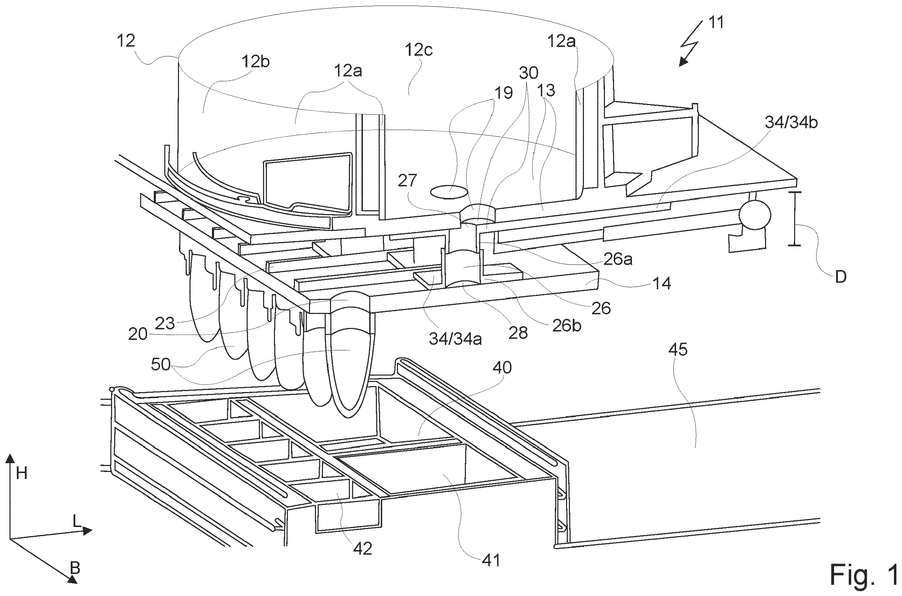

Fig. 1 zeigt eine Dosiervorrichtung 11 mit einem Dosatortopf 12, welcher eine Dosatortopfwandung 12a, einen Dosatortopfinnenbereich 12c und eine Dosatoraußenseite 12b aufweist. Die Dosiervorrichtung 12 weist weiterhin eine obere Dosatorbodenscheibe 13, eine untere Dosatorbodenscheibe 14 und mindestens eine Dosiereinheit 26, vorzugsweise mehrere oder sogar eine Vielzahl von Dosiereinheiten 26 auf. Die Dosiervorrichtung 11 bzw. der Dosator 11 erstreckt sich in eine Längsrichtung L, eine Breitenrichtung B und eine Höhenrichtung H.

An bzw. in der oberen Dosatorbodenscheibe 13 ist vorzugsweise mindestens eine, idealerweise jedoch mehrere oder eine Vielzahl von Auslassöffnungen 19 angeordnet, die bevorzugt dazu geeignet und bestimmt sind Material, welches sich im Dosatortopf 12 befindet aus dem Dosatortopf 12 zu entlassen. An bzw. in der unteren Dosatorbodenscheibe 14 ist vorzugsweise mindestens eine, idealerweise jedoch mehrere oder eine Vielzahl von Ablassöffnungen 20 angeordnet, die bevorzugt dazu geeignet und bestimmt sind zuvor dosiertes Material, welches sich in einer Dosiereinheit befindet in eine Aufnahmeeinrichtung 40 zu füllen, in der die zu produzierenden Platten geformt werden können.

Diese Auslassöffnungen 19 und/oder Ablassöffnungen 20 können rund, oval, rechteckig oder vieleckig ausgebildet sein und durchbrechen vorzugsweise eine gesamte Dicke der oberen und/oder unteren Dosatorbodenscheibe 13, 14. In Höhenrichtung H unterhalb der oberen Dosatorbodenscheibe 13 ist die untere Dosatorbodenscheibe 14 angeordnet, die vorzugsweise und insbesondere durch eine Hubeinrichtung in Höhenrichtung H höhenverstellbar ist bzw. aufwärts und abwärts bewegbar ist.

Zwischen der oberen Dosatorbodenscheibe 13, die vorzugsweise gegenüber dem Dosatortopf 12 fixiert ist, und der unteren Dosatorbodenscheibe 14, die vorzugsweise in Höhenrichtung H beweglich bzw. verschiebbar ist, ist mindestens eine Dosiereinheit 26, bevorzugt eine Vielzahl von Dosiereinheiten 26 angeordnet. Dabei sind die obere 13 und untere 14 Dosatorbodenscheibe parallel zueinander und/oder gegenüber einander angeordnet.

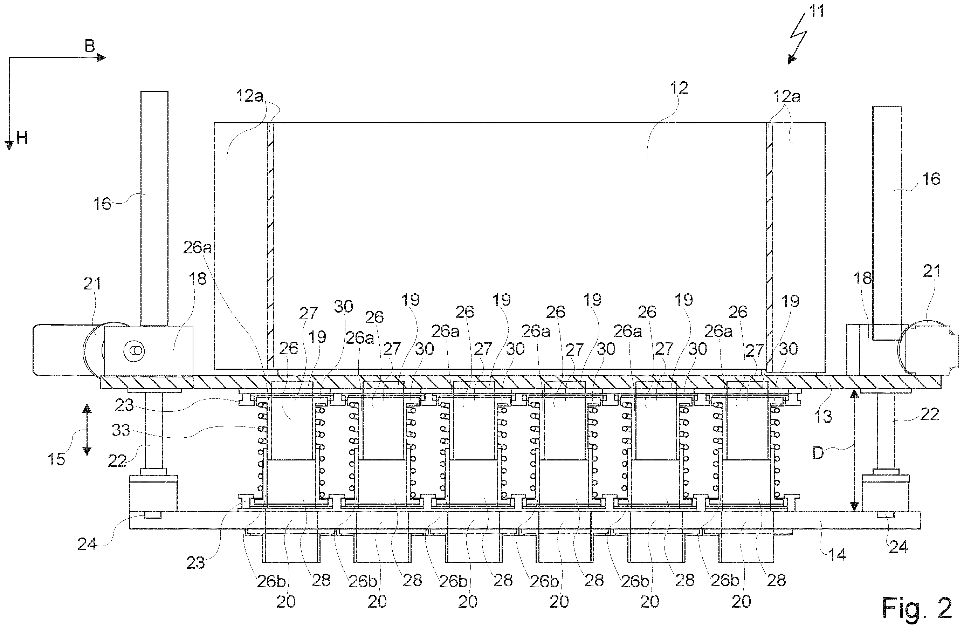

Dabei weist die Dosiervorrichtung (vgl. Fig. 2) eine Hubeinrichtung mit mehreren Hubelementen, vorzugsweise Hubstangen auf, durch die die untere Dosatorbodenscheibe 14 gegenüber der oberen Dosatorbodenscheibe 13 in Höhenrichtung H bewegbar ist. Dabei können die Hubelemente 22 bevorzugt mithilfe von Motoren, bspw. Stellmotoren bzw. Servomotoren, pneumatischen und/oder hydraulischen Vorrichtungen in Höhenrichtung bewegt werden. Zur Kraftübertragung vom Motor 21 auf die Hubelemente 22 können bspw. Zahnräder, Schubgliederbänder, Riemen, Traversen, Gewindespindeln und/oder Schienen eingesetzt werden.

Die Dosiereinheiten sind vorzugsweise als Dosatorbuchsen 26 ausgebildet, wobei jede oder einzelne Dosiereinheiten idealerweise auch mehrteilig ausgebildet sind. Die Dosiereinheiten 26 können bspw. mehrere, vorzugsweise zwei oder drei Rohrelemente 26a, 26b bzw. Abschnitte aufweisen, die insbesondere teleskopartig ineinandergleiten können. So kann jede Dosiereinheit 26 bspw. zwei Teleskopabschnitte 26a, 26b aufweisen, von denen bevorzugt jeweils eines an der unteren Dosatorbodenscheibe 14, insbesondere verschiebbar angeordnet ist, und eines an der oberen Dosatorbodenscheibe 13.

Bei einer Veränderung der Distanz D der unteren 14 und oberen 15 Dosatorbodenscheibe können die Teleskopabschnitte 26a, 26b bzw. die Rohrelemente 26a, 26b auseinander und zusammengeschoben werden, sodass dadurch idealerweise eine Länge bzw. Größe der Dosiereinheiten veränderbar ist, und/oder geändert wird. Dabei können die Teleskopelemente bzw. Rohrelemente 26a, 26b einer Dosiereinheit gegeneinander verschoben werden. Vorzugsweise umschließt ein Rohrelement 26b ein anderes Rohrelement 26a, welches innerhalb des Rohrelements 26b in Höhenrichtung H verschoben werden kann.

Die Dosiereinheiten 26 können einen runden, ovalen oder eckigen Querschnitt aufweisen, wobei insbesondere die Rohrelemente 26a, 26b eine einheitlich bzw. zueinander passende Querschnittsform aufweisen können. Dabei ist ein Querschnitt des Rohrelements 26a, 26b, welches ein anderes Rohrelement 26a, 26b umschließt größer gegenüber dem Querschnitt eines umschlossenen Rohrelements 26a, 26b.

Bevorzugt ist je Dosiereinheit 26 ein Rohrelement 26a in Längs- L und/oder Breitenrichtung B verschiebbar an der oberen Dosatorbodenscheibe 13 angeordnet, und wird insbesondere auch von einem Rohrelement 26b umschlossen, welches vorzugsweise in Längs- L und/oder Breitenrichtung B verschiebbar an der unteren Dosatorbodenscheibe 14 angeordnet ist. Es ist aber auch umgekehrt denkbar. In jedem Fall, sind alle Rohrelemente 26a, 26b derselben Dosiereinheit 26 parallel verschiebbar angeordnet.

Vorzugsweise weist mindestens eine, bevorzugt jedoch jede Dosiereinheit 26 mindestens ein Plattenelement 34 auf, welches idealerweise mit einer Plattenfläche auf bzw. an der unteren 14 und/oder oberen Dosatorbodenscheibe 13, vorzugsweise gleitbar anliegt. Mindestens eines dieser Plattenelemente ist als Verschlussplatte 30 ausgebildet, die vorzugsweise derart verschiebbar in Höhenrichtung H unterhalb der oberen Dosatorbodenscheibe 13 oder oberhalb der unteren Dosatorbodenscheibe 14 angeordnet, dass die Verschlussplatte 30 eine Auslassöffnung 19 oder eine Ablassöffnung 20 vollständig verdecken kann.

Vorzugsweise ist weiterhin mindestens ein Plattenelement 34, insbesondere jedes Plattenelement 34 zwischen mindestens zwei Schienenelementen 23 gleitbar bzw. in Längs- L und/oder Breitenrichtung B verschiebbar angeordnet. Dabei sind die Schienenelemente 23 vorzugsweise parallel zueinander angeordnet und/oder gegenüber einander. Idealerweise ist jede Dosiereinheit 26 bzw. sind je Dosiereinheit 26 zwei Plattenelemente 34 zwischen jeweils zwei Schienenelementen 23 angeordnet. Dabei sind an der oberen 13 und/oder unteren 14 Dosatorbodenscheiben Schienenelemente, vorzugsweise gegenüber einander und parallel zueinander angeordnet. Dadurch sind die Dosiereinheiten 26 zwischen den Schienenelementen 23 in Längs- L und/oder Breitenrichtung B verschiebbar und/oder führbar.

Vorteilhafterweise ist eine Erstreckung in Längs- L und/oder Breitenrichtung B eines ersten Plattenelements 34a an einer Dosiereinheit 26 größer als eine Länge und/oder Breite eines zweiten Plattenelements 34b an derselben Dosiereinheit 26. Idealerweise ist das erste Plattenelement 34a, und insbesondere die Verschlussplatte 30, länger und/oder breiter als das zweite, vorzugsweise in Höhenrichtung unterhalb des ersten Plattenelements 34a.

In Höhenrichtung H unterhalb der Ablassöffnungen 20 und insbesondere an der unteren Dosatorbodenscheibe 14 sind bevorzugt Ablaufelemente 50 angeordnet (vgl. Fig. 1), die idealerweise gegenüber der unteren Dosatorbodenscheibe 14 neigbar und/oder rotierbar sind. Die Ablaufelemente 50 können schalen-, trichter-, rohr- oder rinnenförmig bzw. konkav ausgebildet sein und dazu geeignet einen Materialfluss zu kontrollieren, und zwar idealerweise derart, dass Material langsam und/oder gerichtet in eine in Höhenrichtung H unterhalb der Ablaufelemente 50 und/oder der unteren Dosatorbodenscheibe 14 angeordneten Aufnahmeeinrichtung 40 fließen kann.

Die Aufnahmeeinrichtung 40 weist vorzugsweise mindestens eine Form 41, 42 bevorzugt mehrere Formen 41, 42 auf, die das Material für die Produktion einer Platte aufnehmen können. Dabei können die Formen 41, 42 von einer Aufnahmeeinrichtung 40 unterschiedlich groß ausgeprägt sein bzw. unterschiedliche Volumenmengen aufnehmen. So kann bspw. eine Aufnahmeeinrichtung 40 eine, zwei oder mehr große Formen 41 aufweisen und zwei, drei, vier, fünf oder mehr kleine Formen 42, welche gegenüber den großen Formen 41 geringere Volumenmengen aufnehmen können. Die Aufnahmeeinrichtung 40 ist vorzugsweise auf einer Transporteinrichtung 45 transportierbar.

In Fig. 2 wird in einer Querschnittsdarstellung ein derartiger Dosator 11 mit einem Dosatortopf 12 gezeigt, in dem das abzufüllende Material eingebracht ist. Eine gegenüber dem Dosatortopf 11 fixierte, erste bzw. obere Dosatorbodenscheibe 13 weist verschiedene darin angeordnete Füllbuchsen/Dosatorbuchsen 26 auf. Hierbei sind die Materialzugänge bzw. Materialeingänge 27 an der Oberseite der Dosatorbuchsen 26 innerhalb der fixierten Dosatorbodenscheibe 13 angeordnet, so dass das Material von oben aus dem Dosatortopf 12 den einzelnen Dosatorbuchsen 26 zugeführt werden kann.

Eine höhenverstellbare weitere, untere Dosatorbodenscheibe 14 kann entlang des Doppelpfeiles 15 nach oben und nach unten bewegt werden, so dass diese in einem unterschiedlichen Abstand D zu der fixierten ersteren Dosatorbodenscheibe 13 angeordnet werden kann. Dies geschieht dadurch, dass Hubstangen 22 die innerhalb von Buchsenstangen 16 verlaufen, nach oben und unten verschoben werden können. Dies kann beispielsweise dadurch geschehen, dass Motoren 21 innerhalb oder an Fixierungselementen 18 welche die Elemente 16 und 22 gegenüber der fixierten oberen Dosatorbodenscheibe 13 halten, die Hubstangen 22 gegenüber den Buchsenstangen 16 nach oben und nach unten verschieben bzw. in diese Buchsenstangen 16 hineinfahren lassen oder aus diesen herausfahren lassen. Hierdurch entstehen unterschiedliche Abstände D von der höhenverstellbaren zweiten bzw. unteren Dosatorbodenscheibe 14 gegenüber der ersten fixierten bzw. oberen Dosatorbodenscheibe 13.

Bei einem Nachoben- und Nachuntenfahren der höhenverstellbaren unteren Dosatorbuchsenscheibe 14 entlang dem Pfeil 15 werden Dosierbuchsen 26 unterschiedlich stark ausgefahren. Dies geschieht dadurch, dass diese teleskopartig mittels einzelner Rohrelemente 26a,b aufgebaut sind. Die einzelnen Rohrelemente 26a,b werden durch die Bezugszeichen 26a und 26b beschrieben. Die Rohrelemente 26a,b sind teleskopartig ineinander gleitend aufgebaut und ermöglichen ein unterschiedlich langes Ausbilden der Dosatorbuchsen 26, wodurch unterschiedliche Materialvolumen innerhalb der Dosatorbuchsen 26 je nach Abstandseinstellung der höhenverstellbaren Dosatorbodenscheibe 14 gegenüber der fixierten oberen Dosatorbodenscheibe 13 abgefüllt werden können.

Mittels seitlich angebrachter Anschläge 26b kann die höhenverstellbare untere Dosatorbodenscheibe 14 bis zu einem bestimmten Mindestabstand nach oben gegen die fixierte Dosatorbodenscheibe 13 gefahren werden. Hierbei werden die Rohrelemente 26a,b teleskopartig zusammengefahren und es verringert sich hierdurch das darin einbringbare Materialvolumen. Nun können Formen bestückt werden, die - hier nicht näher dargestellt - unterhalb des Dosators 11 angeordnet sind und eine geringeres Materialvolumen erfordern.

Um die Hubstangen 22 mit der unteren höhenverstellbaren Dosatorbodenscheibe 14 zu verbinden, sind Verbindungselemente 24 vorhanden.

Vorteilhaft sind um die rohrförmigen Dosatorbuchsen 26 Federelemente 33 spiralförmig angeordnet, die die Aufgabe haben, die höhenverstellbare untere Dosatorbodenscheibe 14 nach unten zu drücken, sofern nicht die Motoren 21 dagegenwirken und die höhenverstellbare untere Dosatorbodenscheibe 14 entweder fixieren oder nach oben ziehen. Hierdurch ist ein selbstständiges Nachuntenfahren der höhenverstellbaren unteren Dosatorbodenscheibe 14 in eine gegebenenfalls gewünschte Ausgangsstellung möglich.

Die Federelemente 33 können auch die Funktion eine Vorspannung auf die gleitenden Füllbuchen 26 zu erzeugen um diese an die obere/untere Dosatorbodenscheibe 13/14 anzudrücken und somit eine Selbstdichtung zwischen Füllbuchse 26 und Dosatorbodenscheibe 13/14 schaffen (Spiel zwischen gleitender Füllbuchse 26 und Gleitführung gefordert wodurch ohne Federelemente Undichtigkeiten entstehen würden. Federelemente könnten auch Pneumatikzylinder, Hydraulikzylinder Motore usw. sein.

Ausgangsöffnungen 28 der Dosatorbuchsen 26 sind selbstverständlich im Bereich der höhenverstellbaren unteren Dosatorbodenscheibe 14 oder etwas darunter, wie in dieser Figur 2 dargestellt, angeordnet.

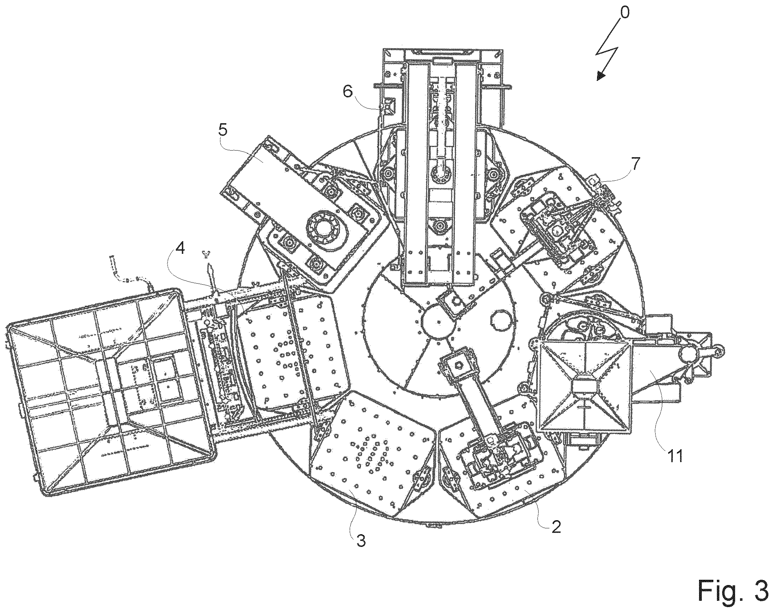

Die Figur 3 zeigt eine Plattenproduktionsanlage 0 mit einer Dosiervorrichtung 11, in der bspw. Vorsatzmaterial dosiert und in eine Form bzw. eine Aufnahmeeinrichtung gefüllt werden kann. Die Dosiervorrichtung bildet vorzugsweise eine erste Station der Plattenproduktionsanlage, die vorzugsweise auch eine Fördereinrichtung aufweist, auf der die Stationen nacheinander abgearbeitet werden können. Eine weitere Station ist bspw. eine Vorsatzverteilerstation 2 zur optimalen Verteilung von Plattenmaterialien. Idealerweise ist nachgeordnet ein Serviceplatz 3, an dem bspw. Formen gewechselt oder kontrolliert werden können.

Eine weitere Station ist bspw. eine Befüllstation 4 zur Befüllung einer Form mit einem Beschickmaterial bspw. Hinterbeton, mit dem die Form vollständig gefüllt werden kann. Das Material bzw. die Form mit dem Plattenmaterial wird vorzugsweise an eine Vorpressstation 5 geleitet, bei der das Plattenmaterial verdichtet werden kann und ein Austausch der Verwendeten Materialien stattfinden kann. Im Anschluss ist eine Hauptpressstation 6 angeordnet, wo die Platten gepresst bzw. bis weiter verdichtet werden können. Eine weitere, und vorzugsweise letzte Station der Plattenproduktionsanlage 0 sieht eine Ausstoßstation 7 vor, an der die Platten zur finalen Bearbeitung und dem Weitertransport aus der Plattenproduktionsanlage 0 ausgestoßen werden können.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den 3 einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 0: Plattenproduktionsanlage
- 2: Vorsatzverteilerstation
- 3: Serviceplatz
- 4: Befüllstation
- 5: Vorpressstation
- 6: Hauptpressstation
- 7: Ausstoßstation
- 11: Dosator/Dosiervorrichtung
- 12: Dosatortopf
- 12a: Dosatortopfwandung
- 12b: Dosatoraußenseite
- 12c: Dosatorinnenbereich
- 13: Obere Dosatorbodenscheibe
- 14: Untere Dosatorbodenscheibe
- 15: Doppelpfeil
- 16: Buchsenstangen
- 18: Fixierungselemente
- 19: Auslassöffnung
- 20: Ablassöffnungen
- 21: Motor
- 22: Hubstangen/Hubelemente
- 23: Schienenelemente
- 24: Verbindungselemente
- 26: Dosatorbuchse/Dosiereinheit
- 26a: Rohrelement
- 26b: Rohrelement/Anschläge
- 27: Materialeingangsöffnung
- 28: Materialausgangsöffnung
- 30: Verschlussplatte
- 33: Federelemente
- 34: Plattenelement
- 34a: Erstes Plattenelement
- 34b: Zweites Plattenelement
- 40: Aufnahmeeinrichtung
- 41: Große Formen
- 42: Kleine Formen
- 45: Transporteinrichtung
- 50: Ablaufelemente
- L: Längsrichtung
- B: Breitenrichtung
- H: Höhenrichtung
- D: Distanz zwischen den Dosatorbodenscheiben

## Patentansprüche

1. Dosiervorrichtung (11) zur Anordnung an einer Plattenproduktionsanlage zur Produktion von Stein- und Betonplatten, wobei sich die Dosiervorrichtung (11) in eine Längenrichtung (L), eine Breitenrichtung (B) und eine Höhenrichtung (H) erstreckt und einen Dosatortopf (12) zur Aufnahme von zu dosierendem Material, mindestens eine obere Dosatorbodenscheibe (13) mit mindestens einer Auslassöffnung (19) zum Auslassen des Materials in mindestens eine Dosiereinheit (26) mit einer Materialeingangsöffnung (27) und einer Materialausgangsöffnung (28) zum Dosieren einer Auslassmenge des Materials aufweist, wobei die Dosiereinheit (26) an der oberen Dosatorbodenscheibe (13) angeordnet ist und durch die Auslassöffnung (19) Material aus dem Dosatortopf (12) in die Dosiereinheit (26) füllbar ist,
**dadurch gekennzeichnet, dass**
die Dosiereinheit (26) zwischen der oberen Dosatorbodenscheibe (13) und einer unteren Dosatorbodenscheibe (14) angeordnet ist, die in Höhenrichtung (H) unterhalb der oberen Dosatorbodenscheibe (13) angeordnet ist, und eine Größe der Dosiereinheit (26) durch eine Veränderung einer Distanz (D) der oberen Dosatorbodenscheibe (13) zur unteren Dosatorbodenscheibe (14) veränderbar ist, ohne die Dosiereinheit (26) wechseln zu müssen.

2. Dosiervorrichtung (11) nach Anspruch 1
**dadurch gekennzeichnet, dass**
die untere Dosatorbodenscheibe (14) in Höhenrichtung (H) gegenüber der oberen Dosatorbodenscheibe (13) höhenverstellbar ist, wobei die obere Dosatorbodenscheibe (13) an dem Dosatortopf (12) fixiert ist.

3. Dosiervorrichtung (11) nach einem der vorhergehenden Ansprüche
**dadurch gekennzeichnet, dass**
die Dosiervorrichtung (11) mindestens eine zweite Dosiereinheit (26) oder mehrere Dosiereinheiten (26) aufweist und eine zweite oder mehrere Auslassöffnungen (19), wobei jede Dosiereinheit (26) einer Auslassöffnung (19) zuordenbar ist.

4. Dosiervorrichtung (11) nach einem der vorhergehenden Ansprüche
**dadurch gekennzeichnet, dass**
jede Dosiereinheit (26, 27) in der Höhenrichtung verlängerbar oder verkürzbar ist.

5. Dosiervorrichtung (11) nach einem der vorhergehenden Ansprüche
**dadurch gekennzeichnet, dass**
die untere Dosatorbodenscheibe (14) parallel zur oberen Dosatorbodenscheibe (13) angeordnet ist.

6. Dosiervorrichtung (11) nach einem der vorhergehenden Ansprüche
**dadurch gekennzeichnet, dass**
die untere Dosatorbodenscheibe (14) Ablassöffnungen (20) aufweist, wobei jede Dosiereinheit (26) einer Ablassöffnung (20) zuordenbar ist.

7. Dosiervorrichtung (11) nach einem der vorhergehenden Ansprüche
**dadurch gekennzeichnet, dass**
die Auslassöffnung/en (19) und/oder die Ablassöffnung/en (20) verschließbar sind.

8. Dosiervorrichtung (11) nach einem der Ansprüche 6-7
**dadurch gekennzeichnet, dass**
die Auslassöffnung/en (19) gegenüber den/der Ablassöffnung/en (20) versetzt angeordnet ist/sind.

9. Dosiervorrichtung (11) nach einem der vorhergehenden Ansprüche
**dadurch gekennzeichnet, dass**
die Dosiereinheit/en (26) gegenüber den Auslassöffnungen (19) und/oder den Ablassöffnungen (20) und der Breitenrichtung (B) und/oder der Längsrichtung (L) verschiebbar sind.

10. Dosiervorrichtung (11) nach einem der Ansprüche 3-9
**dadurch gekennzeichnet, dass**
die Dosiereinheiten (26) parallel zueinander angeordnet und/oder verschiebbar sind.

11. Dosiervorrichtung (11) nach einem der vorhergehenden Ansprüche
**dadurch gekennzeichnet, dass**
die Dosiereinheit/en (26) eine Verschlussplatte (30) aufweist/aufweisen, durch die die Auslassöffnung/en (19) verschließbar ist/sind.

12. Plattenproduktionsanlage mit einer Dosiervorrichtung (11) nach einem der vorhergehenden Ansprüche, wobei die Plattenproduktionsanlage eine Aufnahmeeinrichtung (40) zur Aufnahme einer von der Dosiereinrichtung (11) dosierten Materialmenge aufweist, wobei die Aufnahmeeinrichtung (40) in einer Höhenrichtung unterhalb der Dosiereinrichtung (11) angeordnet ist.

13. Verfahren zum Dosieren von Material zur Produktion von Stein- und Betonplatten mit einer Dosiervorrichtung (11) zur Anordnung an einer Plattenproduktionsanlage, wobei sich die Dosiervorrichtung (11) in eine Längenrichtung (L), eine Breitenrichtung (B) und eine Höhenrichtung (H) erstreckt und einen Dosatortopf (12) zur Aufnahme von zu dosierendem Material, mindestens eine obere Dosatorbodenscheibe (13) mit mindestens einer Auslassöffnung (19) zum Auslassen des Materials Dosatortopf (12) in mindestens eine Dosiereinheit (26) zum Dosieren einer Auslassmenge des Materials aufweist, wobei die Dosiereinheit (26) an der oberen Dosatorbodenscheibe (13) angeordnet ist und durch die Auslassöffnung (19) Material aus dem Dosatortopf (12) in die Dosiereinheit (26) gefüllt wird, wobei die Dosiereinheit (26) zwischen der oberen Dosatorbodenscheibe (13) und einer unteren Dosatorbodenscheibe (14) angeordnet ist, die in Höhenrichtung (H) unterhalb der oberen Dosatorbodenscheibe (13) angeordnet ist, und eine Größe der Dosiereinheit (26) durch eine Veränderung einer Distanz (D) der oberen Dosatorbodenscheibe (13) zur unteren Dosatorbodenscheibe (14) verändert wird, ohne die Dosiereinheit (26) wechseln zu müssen, **umfassend die Schritte:**
a. Einstellung einer gewünschten Distanz (D) der oberen Dosatorbodenscheibe (13) zur unteren Dosatorbodenscheibe (14), um eine gewünschte Größe der Dosiereinheit (26) festzulegen.
b. Öffnen der Auslassöffnung (19) und Befüllen der Dosiereinheit (26) durch eine Materialeingangsöffnung (27) der Dosiereinheit (26)
c. Schließen der Auslassöffnung (19) und entleeren der Dosiereinheit (26) durch eine Materialausgangsöffnung (28) der Dosiereinheit.

14. Verfahren nach Anspruch 13
**dadurch gekennzeichnet, dass**
die Dosiervorrichtung (11) mindestens eine zweite Dosiereinheit (27) oder mehrere Dosiereinheiten (26) aufweist und eine zweite (19) oder mehrere Auslassöffnungen, wobei alle Dosiereinheiten (26) oder eine gewünschte Anzahl an Dosiereinheiten (26) gleichzeitig befüllt werden.

15. Verfahren nach einem der Ansprüche 13-14
**dadurch gekennzeichnet, dass**
die Auslassöffnung/en (19) durch ein Verschieben der Dosiereinheit/en (26) gegenüber den Auslassöffnung/en (19) verschlossen wird/werden.

## Claims

1. Dosing apparatus (11) for arrangement on a slab production plant for production of stone and concrete slabs, wherein the dosing apparatus (11) extends in a longitudinal direction (L), a width direction (B) and a vertical direction (H) and comprises a doser pot (12) to receive material to be dosed, at least one upper doser base disc (13) having at least one discharge opening (19) for discharge of the material into at least one doser unit (26), with a material inlet opening (27) and a material outlet opening (28) for dosing a discharge amount of the material, wherein the dosing unit (26) is arranged on the upper doser base disc (13) and material from the doser pot (12) can be filled into the dosing unit (26) through the discharge opening (19), **characterised in that** the doser unit (26) is arranged between the upper doser base disc (13) and a lower doser base disc (14), which is arranged in the vertical direction (H) below the upper doser base disc (13), and a size of the dosing unit (26) can be changed by changing a distance (D) from the upper doser base disc (13) to the lower doser base disc (14) without having to replace the doser unit (26).

2. Dosing apparatus (11) according to claim 1, **characterised in that** the lower doser base disc (14) is adjustable in the vertical direction (H) relative to the upper doser base disc (13), wherein the upper doser base disc (13) is fixed to the doser pot (12).

3. Dosing apparatus (11) according to any one of the preceding claims, **characterised in that** the dosing apparatus (11) has at least one second dosing unit (26) or a plurality of dosing units (26) and a second or a plurality of discharge openings (19), wherein each dosing unit (26) can be assigned to one discharge opening (19).

4. Dosing apparatus (11) according to any one of the preceding claims, **characterised in that** each dosing unit (26, 27) can be lengthened or shortened in the vertical direction.

5. Dosing apparatus (11) according to any one of the preceding claims, **characterised in that** the lower doser base disc (14) is arranged parallel to the upper doser base disc (13).

6. Dosing apparatus (11) according to any one of the preceding claims, **characterised in that** the lower doser base disc (14) has drainage openings (20), wherein each dosing unit (26) can be assigned to one drainage opening (20).

7. Dosing apparatus (11) according to any one of the preceding claims, **characterised in that** the discharge opening(s) (19) and/or the drainage opening(s) (20) can be closed.

8. Dosing apparatus (11) according to any one of claims 6-7, **characterised in that** the discharge opening(s) (19) and/or the drainage opening(s) (20) are arranged offset.

9. Dosing apparatus (11) according to any one of the preceding claims, **characterised in that** dosing unit(s) (26) are displaceable relative to the discharge opening(s) (19) and/or the drainage opening(s) (20) and/or the width direction (B) and/or the longitudinal direction (L).

10. Dosing apparatus (11) according to any one of claims 3-9, **characterised in that** the dosing units (26) are arranged parallel and/or displaceably relative to one another.

11. Dosing apparatus (11) according to any one of the preceding claims, **characterised in that** the dosing unit(s) (26) has/have a closure plate (30) by which the discharge opening(s) (19) can be closed.

12. Slab production plant having a dosing apparatus (11) according to any one of the preceding claims, wherein the slab production plant has a receiving device (40) to receive an amount of material from the dosing device (11), wherein the receiving device (40) is arranged in a vertical direction below the dosing device (11).

13. Method for dosing material for production of stone and concrete slabs with a dosing apparatus (11) for arrangement on a slab production plant, wherein the dosing apparatus (11) extends in a longitudinal direction (L), a width direction (B) and a vertical direction (H) and comprises a doser pot (12) to receive material to be dosed, at least one upper doser base disc (13) having at least one discharge opening (19) for discharge of the material from the doser pot (12) into at least one doser unit (26) for dosing a discharge amount of the material, wherein the dosing unit (26) is arranged on the upper doser base disc (13) and material from the doser pot (12) is filled into the dosing unit (26) through the discharge opening (19), the doser unit (26) is arranged between the upper doser base disc (13) and a lower doser base disc (14), which is arranged in the vertical direction (H) below the upper doser base disc (13), and a size of the dosing unit (26) can be changed by changing a distance (D) from the upper doser base disc (13) to the lower doser base disc (14) without having to replace the doser unit (26), said method comprising the following steps:
a. setting a desired distance (D) from the upper doser base disc (13) to the lower doser base disc (14), in order to fix a desired size of the dosing unit (26).
b. opening the discharge opening (19) and filling the dosing unit (26) through a material inlet opening (27) of the dosing unit (26).
c. closing the discharge opening (19) and emptying the dosing unit (26) through a material outlet opening (28) of the dosing unit.

14. Method according to claim 13, **characterised in that** the dosing apparatus (11) has at least one second dosing unit (27) or a plurality of dosing units (26) and a second (19) or a plurality of discharge openings, wherein all dosing units (26) or a desired number of dosing units (26) are filled simultaneously.

15. Method according to any one of claims 13-14, **characterised in that** the discharge opening(s) (19) is/are closed by a displacement of the dosing unit(s) (26) with respect to the discharge opening(s) (19).

## Revendications

1. Dispositif de dosage (11), destiné à être placé sur une ligne de production de plaques, pour produire des plaques de pierre ou de béton, le dispositif de dosage (11) s'étendant dans un sens de la longueur (L), dans un sens de la largeur (B) et dans un sens de la hauteur (H) et comportant un creuset de dosage (12), destiné à recevoir de la matière à doser, au moins un disque supérieur de fond (13) de doseur, au moins un orifice de sortie (19), pour faire sortir la matière dans au moins une unité de dosage (26) dotée d'un orifice d'entrée (27) de matière et d'un orifice de sortie (28) de matière, pour le dosage d'une quantité de débit de la matière, l'unité de dosage (26) étant placée sur le disque supérieur de fond (13) de doseur et à travers l'orifice de sortie (19), de la matière étant susceptible d'être chargée à partir du creuset de dosage (12) dans l'unité de dosage (26),
**caractérisé en ce que**
l'unité de dosage (26) est placée entre le disque supérieur de fond (13) de doseur et un disque inférieur de fond (14) de doseur, qui dans le sens de la hauteur (H) est placé en-dessous du disque supérieur de fond (13) de doseur, et une dimension de l'unité de dosage (26) est variable par variation d'une distance (D) entre le disque supérieur de fond (13) de doseur et le disque inférieur de fond (14) de doseur, sans qu'il ne soit nécessaire de changer d'unité de dosage (26).

2. Dispositif de dosage (11) selon la revendication 1,
**caractérisé en ce que**
le disque inférieur de fond (14) de doseur est réglable en hauteur dans le sens de la hauteur (H) par rapport au disque supérieur de fond (13) de doseur, le disque supérieur de fond (13) de doseur étant fixé sur le creuset de dosage (12).

3. Dispositif de dosage (11) selon l'une quelconque des revendications précédentes,
**caractérisé en ce que**
le dispositif de dosage (11) comporte au moins une deuxième unité de dosage (26) ou plusieurs unités de dosage (26) et un deuxième ou plusieurs orifices de sortie (19), chaque unité de dosage (26) étant susceptible d'être affectée à un orifice de sortie (19) .

4. Dispositif de dosage (11) selon l'une quelconque des revendications précédentes,
**caractérisé en ce que**
chaque unité de dosage (26, 27) est susceptible d'être rallongée ou raccourcie dans le sens de la hauteur.

5. Dispositif de dosage (11) selon l'une quelconque des revendications précédentes,
**caractérisé en ce que**
le disque inférieur de fond (14) de doseur est placé à la parallèle du disque supérieur de fond (13) de doseur.

6. Dispositif de dosage (11) selon l'une quelconque des revendications précédentes,
**caractérisé en ce que**
le disque inférieur de fond (14) de doseur comporte des orifices d'évacuation (20), chaque unité de dosage (26) étant susceptible d'être affectée à un orifice d'évacuation (20).

7. Dispositif de dosage (11) selon l'une quelconque des revendications précédentes,
**caractérisé en ce que**
le(s) orifice(s) de sortie (19) et / ou le (s) orifice(s) d'évacuation (20) est / sont obturable(s).

8. Dispositif de dosage (11) selon l'une quelconque des revendications 6 ou 7,
**caractérisé en ce que**
le(s) orifice(s) de sortie (19) est / sont placé(s) en décalage par rapport à l'orifice / aux orifices d'évacuation (20).

9. Dispositif de dosage (11) selon l'une quelconque des revendications précédentes,
**caractérisé en ce que**
l'unité / les unités de dosage (26) sont déplaçables par rapport à l'orifice / aux orifices de sortie (19) et / ou à l'orifice / aux orifices d'évacuation (20) et au sens de la largeur (B) et / ou au sens de la longueur (L).

10. Dispositif de dosage (11) selon l'une quelconque des revendications 3 à 9,
**caractérisé en ce que**
les unités de dosage (26) sont placées et / ou déplaçables à la parallèle les unes des autres.

11. Dispositif de dosage (11) selon l'une quelconque des revendications précédentes,
**caractérisé en ce que**
l'unité / les unités de dosage (26) comporte / comportent une plaque d'obturation (30) par laquelle le(s) orifice(s) de sortie/en (19) est / sont obturables.

12. Ligne de production de plaques pourvue d'un dispositif de dosage (11) selon l'une quelconque des revendications précédentes, la ligne de production de plaques comportant un système récepteur (40), destiné à recevoir un débit de matière dosé par le système de dosage (11), le système récepteur (40) étant placé dans un sens de la hauteur en-dessous du système de dosage (11).

13. Procédé, destiné à doser de la matière pour la production de plaques en pierre ou en béton, à l'aide d'un dispositif de dosage (11), destiné à être placé sur une ligne de production de plaques, le dispositif de dosage (11) s'étendant dans un sens de la longueur (L), dans un sens de la largeur (B) et dans un sens de la hauteur (H) et comportant un creuset de dosage (12), destiné à recevoir de la matière à doser, au moins un disque supérieur de fond (13) de doseur, doté d'au moins un orifice de sortie (19) pour faire sortir de la matière du creuset de dosage (12) dans au moins une unité de dosage (26) pour le dosage d'une quantité de débit de la matière, l'unité de dosage (26) étant placée sur le disque supérieur de fond (13) de doseur et à travers l'orifice de sortie (19), de la matière étant chargée à partir du creuset de dosage (12) dans l'unité de dosage (26), l'unité de dosage (26) étant placée entre le disque supérieur de fond (13) de doseur et un disque inférieur de fond (14) de doseur, qui dans le sens de la hauteur (H) est placé en-dessous du disque supérieur de fond (13) de doseur, et une dimension de l'unité de dosage (26) étant variée par une variation d'une distance (D) entre le disque supérieur de fond (13) de doseur et le disque inférieur de fond (14) de doseur, sans qu'il ne soit nécessaire de changer d'unité de dosage (26), comprenant les étapes consistant à :
a. régler une distance (D) souhaitée entre le disque supérieur de fond (13) de doseur et le disque inférieur de fond (14) de doseur, pour fixer une dimension souhaitée de l'unité de dosage (26),
b. ouvrir l'orifice de sortie (19) et charger l'unité de dosage (26) à travers un orifice d'entrée de matière (27) de l'unité de dosage (26) ,
c. obturer l'orifice de sortie (19) et vider l'unité de dosage (26) à travers un orifice de sortie (28) de matière de l'unité de dosage.

14. Procédé selon la revendication 13,
**caractérisé en ce que**
le dispositif de dosage (11) comporte au moins une deuxième unité de dosage (27) ou plusieurs unités de dosage (26) et un deuxième (19) ou plusieurs orifice(s) de sortie, toutes les unités de dosage (26) ou un nombre souhaité d'unités de dosage (26) étant chargées simultanément.

15. Procédé selon l'une quelconque des revendications 13 ou 14,
**caractérisé en ce que**
le (s) orifice (s) de sortie (19) est / sont obturé (s) par un déplacement de l'unité / des unités de dosage (26) par rapport à l'orifice / aux orifices de sortie (19) .
